# EUROPEAN PATENT APPLICATION

(11) **EP 4 446 000 A1**
(43) Date of publication of application: **16.10.2024**
(21) Application number: 23209966.3
(22) Date of filing: 15.11.2023
(51) Int. Cl.: B01J 13/00, H01M 4/139, H01M 10/0525, H01M 50/489

(54) **AEROGEL COMPOSITION FOR BATTERY INSULATION SHEET, MANUFACTURING METHOD THEREOF, AND MANUFACTURING METHOD FOR A BATTERY INSULATION SHEET**

(30) Priority: 12.04.2023 KR 20230048177
(71) Applicant: Samsung SDI Co., Ltd., Yongin-si, Gyeonggi-do 17084 (KR)
(72) Inventor: Ra, Ha Na, 17084 Yongin-si, Gyeonggi-d (KR); Woo, Myung Heui, 17084 Yongin-si, Gyeonggi-do (KR); Ryu, Bo Kyung, 17084 Yongin-si, Gyeonggi-do (KR); Park, Hye Jin, 17084 Yongin-si, Gyeonggi-do (KR); Lee, Jae Hyun, 17084 Yongin-si, Gyeonggi-do (KR); Yang, Seung Yong, 17084 Yongin-si, Gyeonggi-do (KR)
(74) Representative: Gulde & Partner

(57) **Abstract**

An aerogel composition for a battery insulation sheet, a method of preparing the same, a battery insulation sheet formed using the same, and a method of manufacturing the battery insulation sheet are provided herein. The aerogel composition includes a solvent, a fibrous support, an aerogel, an antifoaming agent, and a functional material including a binder, a dispersant, or a combination thereof, wherein the fibrous support is 5 wt% to 70 wt%, the aerogel is 10 wt% to 90 wt%, the antifoaming agent is 0.05 wt% to 2 wt%, and the functional material is 0.5 wt% to 20 wt%, with respect to a total solid amount of the aerogel composition. The contents of the solvent, the fibrous support, the aerogel, the antifoaming agent, and the functional material sum up to 100 wt% of the aerogel composition.

## Description

### BACKGROUND

### 1. Field

Embodiments of the present disclosure relate to an aerogel composition for a battery insulation sheet, a method of preparing the same and a method of manufacturing the battery insulation sheet.

### 2. Description of the Related Art

Secondary batteries are power storage systems which provide excellent or suitable energy densities for converting electrical energy into chemical energy and for storing the chemical energy. As compared with non-rechargeable primary batteries, secondary batteries are rechargeable and thus are widely used in Internet Technology ("IT") devices such as smartphones, cellular phones, laptop computers, and tablet personal computers (PCs). Recently, in order to reduce environmental pollution, interest in electric vehicles has increased, and thus high-capacity secondary batteries have been adopted in electric vehicles. Such secondary batteries are required or desired to have characteristics such as high density, high output power, and stability.

When a plurality of high-capacity cells, such as lithium ion secondary batteries are included, thermal runaway of one cell due to overheating may adversely affect other adjacent cells, and thus adjacent cells are required or desired to be thermally insulated from each other.

Accordingly, in the related art, a plate material, an insulating resin plate, or the like has been disposed between cells to insulate and thermally insulate adjacent cells from each other.

### SUMMARY

The invention is defined by the appended claims. The description that follows is subjected to this limitation. Any disclosure lying outside the scope of said claims is only intended for illustrative as well as comparative purposes. Aspects of embodiments of the present disclosure are directed toward an aerogel composition for a battery insulation sheet having an excellent or suitable heat insulation property, low dusting property, and sheet uniformity, a method of preparing the same, a battery insulation sheet formed using the same, and a method of manufacturing the battery insulation sheet.

Additional aspects will be set forth in part in the description which follows and, in part, will be apparent from the description, or may be learned by practice of the presented embodiments of the disclosure.

A battery insulation sheet manufactured with the aerogel composition can have an excellent or suitable heat insulation property and excellent or suitable uniformity, manufacturing process costs thereof can be low, and at the same time, aerogel dust can be prevented or substantially prevented from being generated during a manufacturing process or during actual use.

### BRIEF DESCRIPTION OF DRAWINGS

FIG. 1 is a schematic diagram illustrating a battery insulation sheet formed between a plurality of cells, according to one or more embodiments of the present disclosure.
FIGs. 2 and 3 are each a schematic diagram illustrating a structure of a battery insulation sheet according to one or more embodiments of the present disclosure.
FIG. 4 shows a uniformity evaluation criterion of a battery insulation sheet according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed.

The illustrated embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

Unless otherwise noted, like reference numerals denote like elements throughout the attached drawings and the written description, and thus, duplicative descriptions thereof may not be provided. In the drawings, the relative sizes of elements, layers, and regions may be exaggerated for clarity.

In the present disclosure, when particles are spherical, "diameter" indicates a particle diameter or an average particle diameter, and when the particles are non-spherical, the "diameter" indicates a major axis length or an average major axis length. The diameter (or size) of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

A heat insulating material is a material that prevents or substantially prevents the flow of heat from a high heat place to a low heat place and is used not only in refrigerators, refrigerated warehouses, and building construction, but also in various industries including aircraft, electronic components, and vehicle industries.

Such a heat insulating material should have excellent or suitable heat insulation performance through low thermal conductivity and is also required or desired to have mechanical strength for continuously maintaining such a heat insulation property.

Meanwhile, an aerogel is a transparent or semi-transparent high-tech material having a nano-porous structure. Aerogel has high potential as a heat insulating material due to characteristics such as very low density and low thermal conductivity, and is also evaluated as a very efficient super heat insulating material that is usable in various industrial fields.

In addition, one of the biggest advantages of the aerogel is that the aerogel has lower thermal conductivity than conventional organic heat insulating materials, such as expanded polystyrene foam (styrofoam), and the aerogel may solve problems that organic heat insulating materials are vulnerable to, such as fire and harmful gas generated in the case of a fire, which is a fatal weakness of organic heat insulating materials.

However, in general, an aerogel has very weak strength and thus is easily broken even with a small impact due to its high brittleness, and it is difficult to process the aerogel to have a very thin thickness and shape. Thus, despite excellent or suitable heat insulation performance, it is very difficult to prepare a heat insulating material using the aerogel alone.

An aerogel composition according to one or more embodiments includes a solvent; a fibrous support; an aerogel; an antifoaming agent; and a functional material including a binder, a dispersant, or a combination thereof, wherein, with respect to the total solid content (or amount) of the aerogel composition, the fibrous support is included at a content (or amount) of 5 wt% to 70 wt%, the aerogel is included at a content (or amount) of 10 wt% to 90 wt%, the antifoaming agent is included at a content (or amount) of 0.05 wt% to 2 wt%, and the functional material is included at a content (or amount) of 0.5 wt% to 20 wt%. The contents (or amounts) of the solvent, the fibrous support, the aerogel, the antifoaming agent, and the functional material sum up to 100 wt% of the aerogel composition.

A battery insulation sheet manufactured with the aerogel composition including the above components may have an excellent or suitable heat insulation property and excellent or suitable durability, manufacturing process costs thereof may be low, and at the same time, aerogel dust may be prevented or substantially prevented from being generated during a manufacturing process or actual use.

In one or more embodiments, the solvent may include a polar solvent, a non-polar solvent, or a combination thereof.

The polar solvent may include water, an alcohol-based solvent, or a combination thereof.

The water may include, for example, purified water, ultrapure water, or a combination thereof.

The alcohol-based solvent may include, for example, at least one of (e.g., may be one selected from the group consisting of) methanol, ethanol, propanol, pentanol, butanol, hexanol, ethylene glycol, propylene glycol, diethylene glycol, and/or glycerol, but the present disclosure is not limited thereto.

The non-polar solvent may include a hydrocarbon-based solvent. For example, the hydrocarbon-based solvent may include at least one of (e.g., may be one selected from the group consisting of) hexane, pentane, heptane, toluene, and/or benzene. The hydrocarbon-based solvent may be an alkane solvent such as hexane or a mixture including the alkane solvent, but the present disclosure is not limited thereto.

The solvent may include water. When water is used as the solvent, raw material costs and post-processing costs can be effectively reduced. However, when water is used as a solvent, mixing with a hydrophobic aerogel is not easy. In one or more embodiments, a mixing operation design, a mixing condition, the addition and content (e.g., amount) of a binder and a dispersant, and the like have been (and can be) controlled to uniformly disperse the aerogel. In this way, when the aerogel is uniformly dispersed in a composition, without using a large amount of binder, it is possible to form a thin battery insulation sheet having an excellent or suitable heat insulation property, excellent or suitable durability, and low dusting property.

The solvent may be included such that a weight ratio of a content (e.g., amount) of the solvent and the total solid content (e.g., amount) of the aerogel composition is in a range of 1:1 to 1:90. For example, the solvent may be included such that the weight ratio of the content (e.g., amount) of the solvent and the total solid content (e.g., amount) of the aerogel composition is in a range of 1:50 to 1:70, 1:20 to 1:30, or 1:2 to 1:10. The weight ratio of the content (e.g., amount) of the solvent and the total solid content (e.g., amount) may be controlled within the above ranges to control viscosity and apply an aerogel layer.

In one or more embodiments, since the fibrous support is included in the aerogel composition, it is possible to improve the durability of a battery insulation sheet formed using the aerogel composition.

The fibrous support may include a fiber used as a support for a conventional heat insulating material. For example, the fibrous support may include at least one of (e.g., may be one selected from the group consisting of) a natural fiber, a silica fiber, a glass fiber, a carbon fiber, a graphite fiber, a mineral fiber, and/or a polymer fiber. For example, the fibrous support may include a glass fiber, but the present disclosure is not limited thereto.

The natural fiber may include, for example, at least one of (e.g., may be one selected from the group consisting of) hemp, jute, flax, coir, kenaf, and/or cellulose.

The mineral fiber may be, for example, a mineral fiber including at least one of (e.g., being one selected from the group consisting of) basalt, wollastonite, alumina, silica, slag, and/or rock.

The polymer fiber may include, for example, at least one of (e.g., may be one selected from the group consisting of) nylon, polyimide, polyamide, polybenzimidazole, polybenzoxazole, polyamideimide, polyethylene terephthalate, polybutylene terephthalate, polyester, polyethylene (PE), and/or polypropylene (PP). For example, the polymer fiber may include at least one of (e.g., may be one selected from the group consisting of) polyimide, polyamide, and/or polybenzimidazole, but the present disclosure is not limited thereto.

The fibrous support may be, for example, in the form of wool or chopped strands, but the present disclosure is not limited thereto.

The fibrous support may have, for example, a length of 50 µm to 1,000 µm, 70 µm to 800 µm, or 100 µm to 600 µm. Since the aerogel layer includes a fibrous support having a length within at least one of the above ranges, the aerogel layer can be firmly formed, and durability can be improved.

The fibrous support may have, for example, a diameter of 0.1 µm to 20 µm, 0.1 µm to 15 µm, 0.1 µm to 5 µm, 1 µm to 15 µm, or 3 µm to 10 µm. Since the aerogel layer includes a fibrous support having a diameter within at least one of the above ranges, a structure of the aerogel layer can be strengthened, and manufacturing costs can be reduced.

The content (e.g., amount) of the fibrous support may be in a range of 5 wt% to 70 wt%, 25 wt% to 60 wt%, or 30 wt% to 50 wt% with respect to the total solid content (e.g., amount) of the aerogel composition. When a battery insulation sheet is manufactured with the aerogel composition including a fibrous support within at least one of the above ranges, the durability of the battery insulation sheet can be improved.

In one or more embodiments, the aerogel may have a Brunauer-Emmett-Teller (BET) specific surface area of 500 m²/g to 1,000 m²/g measured by ISO 9277:2022. For example, the aerogel may have a BET specific surface area of 500 m²/g to 950 m²/g, 550 m²/g to 950 m²/g, or 600 m²/g to 900 m²/g. Since the aerogel composition includes an aerogel having a BET specific surface area value within at least one of the above ranges, it is possible to provide an insulation sheet capable of effectively preventing or substantially preventing heat transfer and heat propagation between a plurality of cells.

The aerogel may have a particle diameter of 5 µm to 200 µm, 10 µm to 100 µm, or 20 µm to 50 µm. Since the aerogel layer includes an aerogel having a particle diameter within at least one of the above ranges, a heat insulation property is improved, thereby delaying heat transfer between a plurality of cells.

The content (e.g., amount) of the aerogel may be in a range of 10 wt% to 90 wt%, 30 wt% to 70 wt%, or 40 wt% to 60 wt% with respect to the total solid content (e.g., amount) of the aerogel composition. When a battery insulation sheet is manufactured with the aerogel composition including an aerogel within at least one of the above ranges, the heat insulation property of the battery insulation sheet can be improved.

In one or more embodiments, the antifoaming agent may include a silicone-based antifoaming agent. For example, the silicone-based antifoaming agent may include a polysiloxane-based antifoaming agent, and the polysiloxane-based antifoaming agent may include, for example, at least one of (e.g., one selected from among) BYK-019, BYK-021, and/or BYK-094, but the present disclosure is not particularly limited thereto. When the polysiloxane-based antifoaming agent is used as described above, the aerogel composition is defoamed to improve the uniformity of the aerogel layer after coating and drying is improved, thereby further improving a heat insulation property.

The content (e.g., amount) of the antifoaming agent may be in a range of 0.05 wt% to 2 wt%, 0.1 wt% to 1 wt%, or 0.1 wt% to 0.5 wt% with respect to the total solid content (e.g., amount) of the aerogel composition. When a battery insulation sheet is manufactured with the aerogel composition including an antifoaming agent within at least one of the above ranges, the uniformity of the battery insulation sheet can be improved.

In one or more embodiments, the binder may include an aqueous polymer binder. For example, the aqueous polymer binder may include at least one of (e.g., may be one selected from the group consisting of) an aqueous polymer, an anionic water-soluble polymer, a cationic water-soluble polymer, and/or a water-dispersible polymer.

An aqueous polymer may include, for example, at least one of (e.g., may be one selected from the group consisting of) polyvinyl alcohol, polyethylene oxide, polyacrylamide, and/or polyvinylpyrrolidone, but the present disclosure is not limited thereto.

The anionic water-soluble polymer may include at least one of (e.g., may be one selected from the group consisting of) polymers having functional groups of a carboxylic acid, a sulfonic acid, a sulfuric acid ester, a phosphoric acid ester, and/or a salt thereof. For example, the anionic water-soluble polymer may be a polymer having a carboxylic acid group. For example, the anionic water-soluble polymer may include polymaleic acid, but the present disclosure is not limited thereto.

The cationic water-soluble polymer may include at least one of (e.g., may be one selected from the group consisting of) polymers having functional groups of an amine, ammonium, phosphonium, sulfonium, and/or a salt thereof. For example, the cationic water-soluble polymer may be a polymer having an amine group. For example, the cationic water-soluble polymer may include at least one of (e.g., may be one selected from the group consisting of) polyethylene amine and/or polyamine, but the present disclosure is not limited thereto.

The water-dispersible polymer may include at least one of (e.g., may be one selected from the group consisting of) water-dispersible polyurethane and/or water-dispersible polyester, but the present disclosure is not limited thereto.

The binder may include an aqueous polymer and a water-dispersible polymer. For example, the binder may include an aqueous polymer having a binder characteristic and a dispersion property, and water-dispersible polyurethane having a fire resistance property. For example, the binder may include polyvinyl alcohol and water-dispersible polyurethane.

A weight ratio of the aqueous polymer and the water-dispersible polymer may be in a range of 1:1 to 1:5, 1:1 to 1:4, or 1:2 to 1:3. When the aqueous polymer and the water-dispersible polymer are mixed and used in a weight ratio within at least one of the above ranges, it is possible to further improve fire resistance and mechanical properties as well as a heat insulation property, dusting property, and compressibility of an insulation sheet.

The content (e.g., amount) of the binder may be in a range of 0.5 wt% to 20 wt%, 2 wt% to 15 wt%, or 8 wt% to 15 wt% with respect to the total solid content (e.g., amount) of the aerogel composition. When a battery insulation sheet is manufactured with an aerogel composition including a binder within at least one of the above ranges, it is possible to improve the dusting property of the battery insulation sheet.

In one or more embodiments, the dispersant may include at least one of (e.g., may be one selected from the group consisting of) a surfactant and/or a phosphate-based salt. For example, the dispersant may include at least one of (e.g., may be one selected from among) a nonionic surfactant, an anionic surfactant, an amphoteric surfactant, a natural surfactant such as lecithin, and/or phosphate, but the present disclosure is not limited thereto.

When the dispersant is further included, the dispersion of the aerogel in a composition is further improved, thereby uniformly dispersing the fibrous support and the aerogel.

The content (e.g., amount) of the dispersant may be in a range of 0.1 wt% to 6 wt%, 0.1 wt% to 5 wt%, or 0.1 wt% to 3 wt% with respect to the total solid content (e.g., amount) of the aerogel composition. When the dispersant is included within at least one of the above ranges, the aerogel composition can be manufactured at low cost, and a battery insulation sheet having an excellent or suitable heat insulation property, excellent or suitable uniformity, and excellent or suitable dusting property can be manufactured using the aerogel composition.

In one or more embodiments, the binder and the dispersant may be included in a weight ratio of 1:0.001 to 1:0.67, 1:0.001 to 1:0.5, or 1:0.001 to 1:0.3. When the binder and the dispersant are mixed in a weight ratio within at least one of the above ranges, the aerogel may be more uniformly dispersed in the aerogel layer.

In one or more embodiments, with respect to the total solid content (e.g., amount) of the aerogel composition, the fibrous support may be included at a content (e.g., amount) of 25 wt% to 60 wt%, the aerogel may be included at a content (e.g., amount) of 30 wt% to 70 wt%, the antifoaming agent may be included at a content (e.g., amount) of 0.1 wt% to 1 wt%, and the binder may be included at a content (e.g., amount) of 2 wt% to 15 wt%.

For example, with respect to the total solid content (e.g., amount) of the aerogel composition, the fibrous support may be included at a content (e.g., amount) of 30 wt% to 50 wt%, the aerogel may be included at a content (e.g., amount) of 40 wt% to 60 wt%, the antifoaming agent may be included at a content (e.g., amount) of 0.1 wt% to 0.5 wt%, and the binder may be included at a content (e.g., amount) of 8 wt% to 15 wt%. When the aerogel composition is formed within the above ranges, it is possible to realize an excellent or suitable heat insulation property and simultaneously improve durability, and it is possible to improve a binding force between the fibrous support and the aerogel, thereby preventing or substantially preventing the generation of dust and improving the uniformity of an insulation sheet.

In one or more embodiments, with respect to the total solid content (e.g., amount) of the aerogel composition, the fibrous support may be included at a content (e.g., amount) of 25 wt% to 60 wt%, the aerogel may be included at a content (e.g., amount) of 30 wt% to 70 wt%, the antifoaming agent may be included at a content (e.g., amount) of 0.1 wt% to 1 wt%, the binder may be included at a content (e.g., amount) of 2 wt% to 15 wt%, and the dispersant may be included at a content (e.g., amount) of 0.1 wt% to 5 wt%.

For example, with respect to the total solid content (e.g., amount) of the aerogel composition, the fibrous support may be included at a content (e.g., amount) of 30 wt% to 50 wt%, the aerogel may be included at a content (e.g., amount) of 40 wt% to 60 wt%, the antifoaming agent may be included at a content (e.g., amount) of 0.1 wt% to 0.5 wt%, the binder may be included at a content (e.g., amount) of 5 wt% to 10 wt%, and the dispersant may be included at a content (e.g., amount) of 0.1 wt% to 3 wt%. When the aerogel composition is formed within the above ranges, it is possible to improve the dispersibility of the aerogel, realize an excellent or suitable heat insulation property, and simultaneously improve durability, and it is possible to improve a binding force between the fibrous support and the aerogel, thereby preventing or substantially preventing the generation of dust and improving the uniformity of an insulation sheet.

In one or more embodiments, the aerogel composition may further include a silane-based compound. The silane-based compound may include, for example, at least one of (e.g., may be one selected from the group consisting of) 3-(trimethoxysilyl)propylmethacrylate, methyltriethoxysilane, methyltrimethoxysilane, ethyltrimethoxysilane, octadecyltrimethoxysilane, ethyltriethoxysilane, and/or 3-glycidoxypropyltrimethoxysilane. When the silane-based compound is further included, dispersibility can be further improved.

In one or more embodiments, the aerogel composition may optionally further include an additive such as a wetting agent, an emulsifier, a compatibilizer, a viscosity modifier, a pH modifier, a stabilizer, an antioxidant, an acidic or basic trapping agent, a metal deactivator, an antifoaming agent, an antistatic agent, a thickener, an adhesion promoter, a binding agent, a flame retardant, an impact modifier, a pigment, a dye, a colorant, or a deodorizer.

A method of preparing an aerogel composition according to one or more embodiments may include mixing a functional material including a binder, a dispersant, or a combination thereof into a solvent to prepare a solvent mixture; mixing the solvent mixture and an aerogel to prepare an aerogel mixture; mixing the aerogel mixture and a fibrous support to prepare an aerogel composition; and mixing the aerogel composition and an antifoaming agent, wherein with respect to the total solid content (e.g., amount) of the aerogel composition, the fibrous support may be included at a content (e.g., amount) of 5 wt% to 70 wt%, the aerogel may be included at a content (e.g., amount) of 10 wt% to 90 wt%, the antifoaming agent may be at a content (e.g., amount) of 0.05 wt% to 2 wt%, and the functional material may be included at a content (e.g., amount) of 0.5 wt% to 20 wt%.

In the mixing of the functional material in the solvent to prepare the solvent mixture, the binder may be mixed into the solvent, or the binder and the dispersant may be mixed into the solvent. Here, detailed descriptions of the solvent, the binder, and the dispersant may be the same as those described above.

In the mixing of the solvent mixture and the aerogel to prepare the aerogel mixture, the aerogel may be introduced in the form of powder, and a detailed description of the aerogel may be the same as the above description.

In the mixing of the aerogel mixture and the fibrous support to prepare the aerogel composition, a specific description of the fibrous support may be the same as the above description.

In the mixing of the aerogel composition and the antifoaming agent, a specific description of the antifoaming agent may be the same as the above description.

When the antifoaming agent is added to the aerogel composition and mixed, it is possible to remove bubbles in the aerogel composition, and thus, when a battery insulation sheet is manufactured using the aerogel composition, it is possible to further improve the uniformity of the fibrous support and the aerogel in an aerogel layer.

In each of the mixing of the functional material including the binder, the dispersant, or the combination thereof into the solvent to prepare the solvent mixture; the mixing of the solvent mixture and the aerogel to prepare the aerogel mixture; the mixing of the aerogel mixture and the fibrous support to prepare the aerogel composition; and the mixing of the aerogel composition and the antifoaming agent, during mixing, the mixing may be performed using a mixer. For example, the mixer may include a planetary mixer, a thinky mixer, and the like, but the present disclosure is not limited thereto.

For example, when the solvent mixture and the aerogel are mixed, the planetary mixer may be used. When the solvent mixture and the aerogel are mixed using the planetary mixer, the aerogel may be uniformly dispersed in the solvent.

The planetary mixer may be a device that can be used to mix or agitate different materials to prepare a homogeneous mixture. The planetary mixer may include a blade capable of performing planetary motion.

In one or more embodiments, the planetary mixer may include one or more of one or more planetary blades and/or one or more high-speed dispersion blades. For example, the planetary mixer may include one or more planetary blades and one or more high-speed dispersion blades.

The planetary blades and the high-speed dispersion blades continuously rotate about axes thereof. A rotation speed may be expressed in units of rotations per minute (rpm).

In one or more embodiments, the planetary mixer may include a first blade and a second blade having different rotational axes. For example, the first blade may be a low-speed blade and the second blade may be a high-speed blade. Here, a low speed and a high speed refer to relative rotation speeds between the first blade and the second blade. For example, the first blade may be an open blade, and the second blade may be a Despa blade.

A rotation speed of the first blade may be, for example, in a range of 10 rpm to 100 rpm, 10 rpm to 60 rpm, or 30 rpm to 70 rpm. In addition, a rotation speed of the second blade may be, for example, in a range of 100 rpm to 2,000 rpm, 100 rpm to 1,000 rpm, 300 rpm to 1,700 rpm, or 500 rpm to 1,700 rpm.

A rotation speed of the second blade in the mixing of the aerogel composition and the antifoaming agent may be less than a rotation speed of the second blade in at least one operation of the mixing of the solvent mixture and the aerogel to prepare the aerogel mixture and/or the mixing of the aerogel mixture and the fibrous support to prepare the aerogel composition. For example, the rotation speed of the second blade in the mixing of the aerogel composition and the antifoaming agent may be in a range of 30% to 75%, 40% to 70%, or 40% to 60% of the rotation speed of the second blade in at least one operation of the mixing of the solvent mixture and the aerogel to prepare the aerogel mixture and/or the mixing of the aerogel mixture and the fibrous support to prepare the aerogel composition. When the rotation speed is in at least one of the above ranges, it is possible to minimize bubbles from being additionally generated in a composition and effectively remove bubbles.

When the functional material is added to the solvent and mixed, the rotation speed of the first blade of the mixer may be in a range of 10 rpm to 60 rpm, 20 rpm to 50 rpm, or 30 rpm to 40 rpm, and the rotation speed of the second blade may be in a range of 300 rpm to 1,700 rpm, 600 rpm to 1,000 rpm, or 700 rpm to 800 rpm. When the solvent and the functional material are mixed as described above, a solvent mixture in which the binder, the dispersant, or the combination thereof is uniformly dispersed may be prepared to more easily mix the aerogel in a subsequent operation.

When the solvent mixture and the aerogel are mixed, the rotation speed of the first blade of the mixer may be in a range of 30 rpm to 70 rpm, 40 rpm to 70 rpm, or 60 rpm to 70 rpm, and the rotation speed of the second blade may be in a range of 500 rpm to 1,700 rpm, 600 rpm to 1,600 rpm, or 800 rpm to 1,500 rpm. When the aerogel is added to the solvent mixture and mixed as described above, the aerogel can be prevented or substantially prevented from being agglomerated, thereby inducing uniform dispersion.

When the aerogel mixture and the fibrous support are mixed, the rotation speed of the first blade of the mixer may be in a range of 10 rpm to 60 rpm, 20 rpm to 50 rpm, or 30 rpm to 40 rpm, and the rotation speed of the second blade may be in a range of 300 rpm to 1,700 rpm, 400 rpm to 1,500 rpm, or 800 rpm to 1,200 rpm. As described above, when the aerogel mixture and the fibrous support are mixed, bubbles in a composition are removed, viscosity is adjusted, and the fibrous support is easily dispersed between the uniformly dispersed aerogel. Thus, the aerogel may be present in a form surrounding the fibrous support in the composition. Here, the binder may be present between the aerogel and the fibrous support to improve a binding force between the aerogel and the fibrous support.

When the aerogel composition mixture and the antifoaming agent are mixed, the rotation speed of the first blade of the mixer may be in a range of 10 rpm to 60 rpm, 20 rpm to 50 rpm, or 30 rpm to 40 rpm, and the rotation speed of the second blade may be in a range of 100 rpm to 1,000 rpm, 150 rpm to 800 rpm, or 300 rpm to 700 rpm. When the aerogel composition and the antifoaming agent are mixed under rotation speed conditions within at least one of the above ranges, bubbles in the aerogel composition can be effectively removed.

Dispersing the antifoaming agent may be performed for 10 minutes or less, 1 minute to 10 minutes, or 3 minutes to 8 minutes. In contrast, when the aerogel composition and the antifoaming agent are mixed for more than 10 minutes, the generation of bubbles may be promoted. The dispersing of the antifoaming agent is performed for 10 minutes or less, thereby effectively removing bubbles from the aerogel composition.

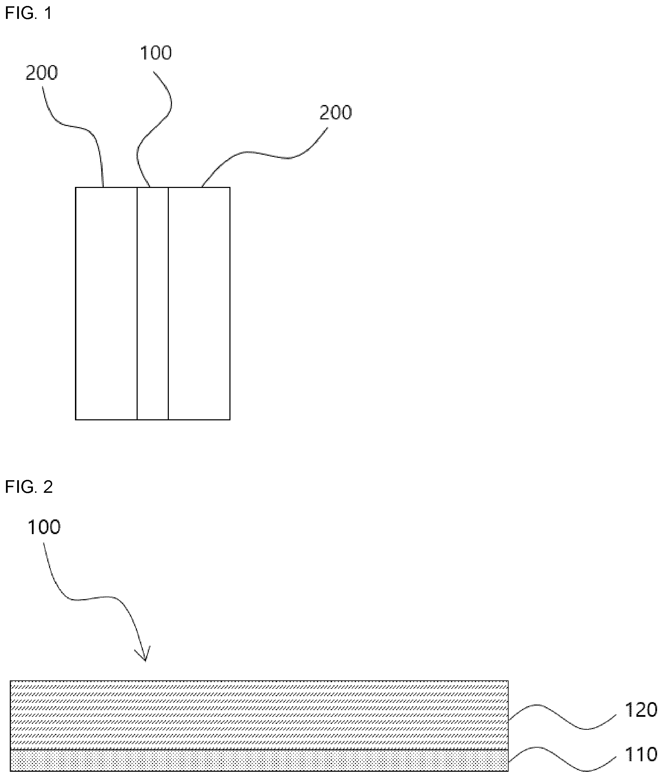

FIG. 1 is a schematic diagram illustrating a battery insulation sheet formed between a plurality of cells, according to one or more embodiments of the present disclosure.

Referring to FIG. 1, a battery insulation sheet 100 according to one or more embodiments may be formed between cells 200 in a battery module including a plurality of cells 200. Here, each of upper and lower surfaces of the battery insulation sheet 100 may be arranged to face one of the adjacent cells 200. Since the battery insulation sheet 100 according to one or more embodiments is formed between the plurality of cells 200, a flame may be (is) blocked in the cell in advance to suppress the propagation of the flame to other cells as much as possible, thereby providing a battery module having further enhanced safety and a battery pack including the same.

FIG. 2 is a schematic diagram illustrating a structure of the battery insulation sheet according to one or more embodiments of the present disclosure.

Referring to FIG. 2, the battery insulation sheet 100 may include a substrate 110, and an aerogel layer 120 formed on the substrate 110, and each of the upper and lower surfaces of the battery insulation sheet 100 may be disposed to face one of adjacent cells.

Since the aerogel layer is formed on the substrate using an aerogel composition according to one or more embodiments, the battery insulation sheet may have improved uniformity as well as an improved heat insulation property, and when the battery insulation sheet is manufactured or installed inside a device, an aerogel can be prevented or substantially prevented from falling out to generate dust.

In the battery insulation sheet, a specific description of the aerogel composition providing the aerogel layer may be the same as the above description.

The substrate may include, for example, one or more of a suitable substrate made of a resin, a metal, an inorganic material other than a metal, and/or a composite thereof, and a type thereof is not limited. In addition, the substrate may be in the form of a film, a thin film, or a sheet, and the form thereof is not particularly limited.

The resin may include, for example, at least one of (e.g., may be one selected from the group consisting of) polyethylene, polypropylene, polystyrene, polyethylene terephthalate, and/or polyamide.

The metal may include, for example, at least one of (e.g., may be one selected from the group consisting of) copper, nickel, cobalt, iron, chromium, vanadium, palladium, ruthenium, rhodium, molybdenum, tungsten, iridium, silver, gold, and/or platinum. When a substrate made of a metal material is used, the substrate may be subjected to anti-corrosion treatment, insulation treatment, and/or the like if necessary or desired.

The inorganic material may include at least one of (e.g., may be one selected from the group consisting of) calcium carbonate (CaCOs), talc, and/or mica.

For example, the substrate may include an inorganic material. In one or more embodiments, the substrate may include mica. In the above cases, the heat insulation property, durability, and/or the like of the insulation sheet can be improved.

In one or more embodiments, the aerogel layer may have a single layer structure or a multi-layered structure. When the aerogel layer has a multi-layered structure, the aerogel layer may be formed as 2 to 10 layers, 2 to 7 layers, or 2 to 5 layers.

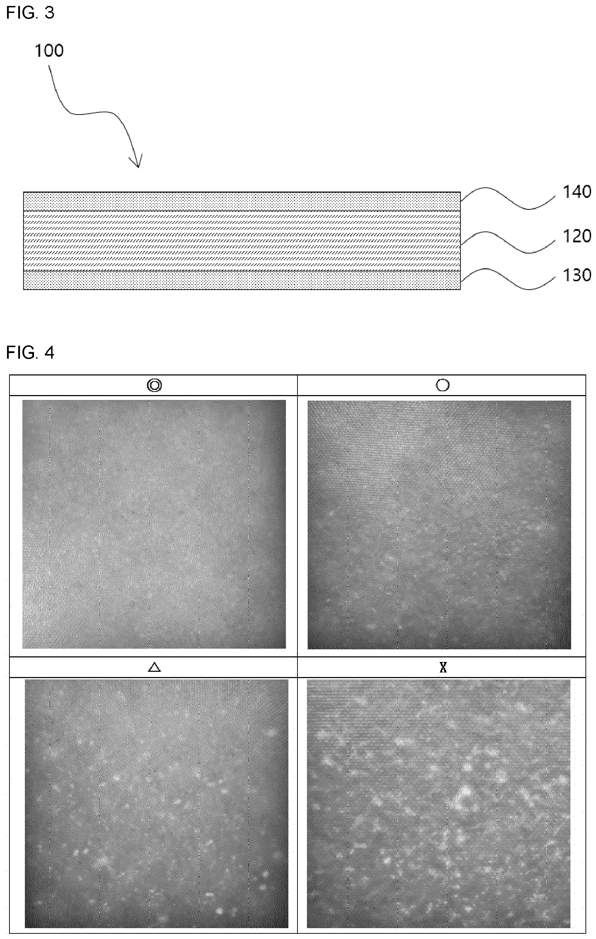

FIG. 3 is a schematic diagram illustrating a structure of a battery insulation sheet according to one or more embodiments of the present disclosure.

Referring to FIG. 3, in one or more embodiments, a battery insulation sheet 100 may have a structure including a first substrate 130, an aerogel layer 120 formed on the first substrate 130, and a second substrate 140 formed on the aerogel layer 120. Here, each of the first substrate 130 and the second substrate 140 may be disposed to face one of adjacent cells 200, as shown, for example, in FIG. 1. In one or more embodiments, the first substrate and the second substrate may be formed of the same material or different materials.

A method of manufacturing a battery insulation sheet according to one or more embodiments may include coating a substrate with the aerogel composition, and drying the substrate coated with the aerogel composition. Here, the substrate may be the substrate 110 in FIG. 2 or any one of the first substrate 130 and the second substrate 140 in FIG. 3.

In the method of manufacturing a battery insulation sheet, detailed descriptions of the substrate and the aerogel composition may be the same as those described above.

The coating may be performed by applying an aerogel slurry on a conventional substrate.

The coating may be repeated once or twice or more.

The drying may be performed under a temperature condition of, for example, 25°C to 100°C, 45°C to 90°C, or 60°C to 85°C. Since the drying is performed under at least one of the above temperature conditions, the substrate and the aerogel layer can be prevented or substantially prevented from being detached from each other, a strong aerogel layer can be formed on the substrate without a separate adhesive member or adhesive, and a coating layer can be formed in a shape in which an aerogel is coated around a plurality of dispersed fibrous supports.

In one or more embodiments, the method of manufacturing a battery insulation sheet may further include, before the drying, stacking a substrate on the applied aerogel composition. In this case, a battery insulation sheet may be manufactured in a structure in which, without an adhesive layer, a plurality of substrates, for example, a first substrate and a second substrate, are formed on both surfaces of the aerogel layer.

A battery insulation sheet can be manufactured through a simple method of coating a substrate with the aerogel composition according to one or more embodiments and drying the substrate coated with the aerogel composition without using a separate adhesive or providing an adhesive layer. An aerogel is uniformly dispersed so that, even with a thin thickness, an excellent or suitable heat insulation property, excellent or suitable uniformity, and low dusting property can be realized.

Hereinafter, specific Examples of the present disclosure will be described. Meanwhile, Examples to be described below are just provided for explaining the present disclosure, and accordingly, the present disclosure is not limited to the following Examples. Contents which are not described here may be fully inferred by those skilled in the art, and thus descriptions thereof may be omitted.

### Manufacturing of battery insulation sheet

### Example 1

### 1. Preparation of aerogel composition

Polyvinyl alcohol (manufactured by Sigma-Aldrich Co., LLC) as a binder was added to ultrapure water as a solvent and mixed under conditions of 30 rpm of an open blade and 700 rpm of a despa blade to prepare a solvent mixture. Then, an aerogel having a BET value of 800 m²/g was added to the solvent mixture and mixed under conditions of 70 rpm of an open blade and 1,500 rpm of a despa blade to prepare an aerogel mixture. Glass wool was added to the aerogel mixture and mixed under conditions of 30 rpm of an open blade and 1,200 rpm of a despa blade to prepare an aerogel composition. Then, a polysiloxane-based antifoaming agent (BYK-094 manufactured by BYK Co., Ltd.) was added to the aerogel composition and mixed for 8 minutes under conditions of 30 rpm of an open blade and 700 rpm of a despa blade to remove bubbles in the aerogel composition. Here, during mixing, a planetary mixer (PT-005 manufactured by DNTEK Co., Ltd.) was used.

It was confirmed that a solid content (e.g., amount) of the prepared aerogel composition included the aerogel at 50 wt%, the glass wool at 40 wt%, the polyvinyl alcohol at 9.9 wt%, and the antifoaming agent at 0.1 wt%.

### 2. Manufacturing of battery insulation sheet

The prepared aerogel composition as a slurry was applied on a mica sheet (muscovite) (manufactured by Pamica Electric Material (Hubei) Co., Ltd.) having a thickness of 0.1 mm, and then the mica sheet having a thickness of 0.1 mm was stacked in a sandwich type and then applied through a roll rolling method. Then, the stacked mica sheet was dried at a temperature of 60°C for 24 hours to form an aerogel layer and to manufacture a battery insulation sheet. It was confirmed that the manufactured battery insulation sheet had a total thickness of 1.38 mm.

### Example 2

A battery insulation sheet was manufactured in substantially the same manner as in Example 1, except that, when an aerogel composition was prepared, input amounts of raw materials in Example 1 were adjusted to prepare an aerogel composition with a solid content (e.g., amount) including an aerogel at 50 wt%, glass wool at 40 wt%, polyvinyl alcohol at 9.5 wt%, and an antifoaming agent at 0.5 wt%.

### Example 3

A battery insulation sheet was manufactured in substantially the same manner as in Example 1, except that, when an aerogel composition was prepared, input amounts of raw materials in Example 1 were adjusted to prepare an aerogel composition with a solid content (e.g., amount) including an aerogel at 50 wt%, glass wool at 40 wt%, polyvinyl alcohol at 8 wt%, and an antifoaming agent at 2 wt%.

### Example 4

A battery insulation sheet was manufactured in substantially the same manner as in Example 1, except that, when an aerogel composition was prepared, input amounts of raw materials in Example 1 were adjusted to prepare an aerogel composition with a solid content (e.g., amount) including an aerogel at 50 wt%, glass wool at 40 wt%, polyvinyl alcohol at 9.95 wt%, and an antifoaming agent at 0.05 wt%.

### Example 5

A battery insulation sheet was manufactured in substantially the same manner as in Example 1, except that, when an aerogel composition was prepared, water-dispersible polyurethane was used instead of polyvinyl alcohol as a binder in Example 1.

### Example 6

### 1. Preparation of aerogel composition

Polyvinyl alcohol (manufactured by Sigma-Aldrich Co., LLC) as a binder and a surfactant (Triton-X100 manufactured by Sigma-Aldrich Co., LLC) as a dispersant were added to ultrapure water as a solvent and mixed under conditions of 30 rpm of an open blade and 700 rpm of a despa blade to prepare a solvent mixture. Then, an aerogel having a BET value of 800 m²/g was added to the solvent mixture and mixed under conditions of 70 rpm of an open blade and 1,500 rpm of a despa blade to prepare an aerogel mixture. Glass wool was added to the aerogel mixture and mixed under conditions of 30 rpm of an open blade and 1,200 rpm of a despa blade to prepare an aerogel composition. Then, a polysiloxane-based antifoaming agent (BYK-094 manufactured by BYK Co., Ltd.) was added to the aerogel composition and mixed for 8 minutes under conditions of 30 rpm of an open blade and 700 rpm of a despa blade to remove bubbles in the aerogel composition. Here, during mixing, a planetary mixer (PT-005 manufactured by DNTEK Co., Ltd.) was used.

It was confirmed that a solid content (e.g., amount) of the prepared aerogel composition included the aerogel at 50 wt%, the glass wool at 40 wt%, the polyvinyl alcohol at 9.8 wt%, the dispersant at 0.1 wt%, and the antifoaming agent at 0.1 wt%.

### 2. Manufacturing of battery insulation sheet

The prepared aerogel composition as a slurry was applied on a mica sheet (muscovite) (manufactured by Pamica Electric Material (Hubei) Co., Ltd.) having a thickness of 0.1 mm, and then the mica sheet having a thickness of 0.1 mm was stacked in a sandwich type and then applied through a roll rolling method. Then, the stacked mica sheet was dried at a temperature of 60°C for 24 hours to form an aerogel layer and to manufacture a battery insulation sheet. It was confirmed that the manufactured battery insulation sheet had a total thickness of 1.38 mm.

### Example 7

### 1. Preparation of aerogel composition

Polyvinyl alcohol (manufactured by Sigma-Aldrich Co., LLC) and water-dispersible polyurethane as a binder, and a surfactant (Triton-X100 manufactured by Sigma-Aldrich Co., LLC) as a dispersant were added to ultrapure water as a solvent and mixed under conditions of 30 rpm of an open blade of and 700 rpm of a despa blade to prepare a solvent mixture. Then, an aerogel having a BET value of 800 m²/g was added to the solvent mixture and mixed under conditions of 70 rpm of an open blade and 1,500 rpm of a despa blade to prepare an aerogel mixture. Glass wool was added to the aerogel mixture and mixed under conditions of 30 rpm of an open blade and 1,200 rpm of a despa blade to prepare an aerogel composition. Then, a polysiloxane-based antifoaming agent (BYK-094 manufactured by BYK Co., Ltd.) was added to the aerogel composition and mixed for 8 minutes under conditions of 30 rpm of an open blade and 700 rpm of a despa blade to remove bubbles in the aerogel composition. Here, during mixing, a planetary mixer (PT-005 manufactured by DNTEK Co., Ltd.) was used.

It was confirmed that a solid content (e.g., amount) of the prepared aerogel composition included the aerogel at 50 wt%, the glass wool at 40 wt%, the polyvinyl alcohol at 3 wt%, the water-dispersible polyurethane at 6.8%, the dispersant at 0.1 wt%, and the antifoaming agent at 0.1 wt%.

### 2. Manufacturing of battery insulation sheet

The prepared aerogel composition as a slurry was applied on a mica sheet (muscovite) (manufactured by Pamica Electric Material (Hubei) Co., Ltd.) having a thickness of 0.1 mm, and then the mica sheet having a thickness of 0.1 mm was stacked in a sandwich type and then applied through a roll rolling method. Then, the stacked mica sheet was dried at a temperature of 60°C for 24 hours to form an aerogel layer and to manufacture a battery insulation sheet. It was confirmed that the manufactured battery insulation sheet had a total thickness of 1.38 mm.

### Comparative Example 1

A battery insulation sheet was manufactured in substantially the same manner as in Example 1, except that, when an aerogel composition was prepared, input amounts of raw materials in Example 1 were adjusted to prepare an aerogel composition with a solid content (e.g., amount) including an aerogel at 50 wt%, glass wool at 40 wt%, polyvinyl alcohol at 9.99 wt%, and an antifoaming agent at 0.01 wt%.

### Comparative Example 2

A battery insulation sheet was manufactured in substantially the same manner as in Example 1, except that, when an aerogel composition was prepared, input amounts of raw materials in Example 1 were adjusted to prepare an aerogel composition with a solid content (e.g., amount) including an aerogel at 50 wt%, glass wool at 40 wt%, polyvinyl alcohol at 7 wt%, and an antifoaming agent at 3 wt%.

### Experimental Examples

### Experimental Example 1: Evaluation of heat insulation property

A heat insulation property was evaluated using the insulation sheets manufactured in Examples 1 to 7 and Comparative Examples 1 and 2.

Specifically, each of the insulation sheets was placed between a pair of 1 mm-thick aluminum plates facing each other and placed on a heat press, an upper plate of the heat press was heated to a temperature 350°C, and a lower plate of the heat press was maintained at a starting temperature of 40°C without being heated. Then, 11 minutes after a pressure of 20 kN was applied to the lower plate of the heat press, a temperature of the lower plate of the heat press was measured and is shown in Table 1.

### Experimental Example 2: Evaluation of dusting property

A dusting property was evaluated using the insulation sheets prepared in Examples 1 to 7 and Comparative Examples 1 and 2.

Specifically, a weight of each of the insulation sheets was measured before evaluation. Then, the insulation sheet was placed on a rubber plate, and a total of five points such as vertices and a center of the insulation sheet were regularly hit with a rubber mallet, dust was brushed off, and then the weight of the insulation sheet was measured. Subsequently, a weight before a physical impact was compared with a weight after the physical impact to calculate a weight reduction rate. Results thereof are shown in Table 1.

### Experimental Example 3: Evaluation of uniformity

Uniformity was evaluated using the insulation sheets prepared in Examples 1 to 7 and Comparative Examples 1 and 2.

Specifically, the sheet was placed on a light-emitting diode (LED) light box with a maximum brightness of 1,000 Lm or more, and the presence, size, and number of pinholes were identified to check the uniformity of the sheet itself. Results thereof are shown in Table 1 below. As shown in FIG. 4, a clean sheet without pinholes is marked as ⊚, a sheet having pinholes having a small area is marked as o, a sheet having pinholes having a large area is marked as △, and a sheet not usable due to almost no uniformity is marked as X.

**Table 1**

| | Examples | | | | | | | Comparative Examples | |
|---|---|---|---|---|---|---|---|---|---|
| | 1 | 2 | 3 | 4 | 5 | 6 | 7 | 1 | 2 |
| Temperature of lower plate (°C) | 84.9 | 84.3 | 85.8 | 86.1 | 84.0 | 84.5 | 83.7 | 86.3 | 90.8 |
| Weight reduction rate (%) | 1.8 | 1.4 | 1.7 | 3.2 | 1.6 | 1.3 | 0.9 | 4.5 | 6.8 |
| Uniformity | ○ | ⊚ | ○ | ○ | ○ | ⊚ | ⊚ | Δ | X |

Referring to Table 1, in the case of Examples 1 to 7, it could be confirmed that all of the heat insulation property, dusting property, and uniformity were excellent or suitable. Here, looking at Examples 1 to 4, changes in heat insulation property, dusting property, and uniformity according to a component content (e.g., amount) of the aerogel composition can be confirmed. In addition, in the case of Example 5, it could be seen that, since a dispersant could not serve as a fire-resistant binder, dusting property was slightly reduced, but the heat insulation property was improved. In addition, looking at Example 6 in which a binder and a dispersant were mixed, it could be confirmed that the heat insulation property, dusting property, and uniformity were improved. In addition, looking at Example 7 in which polyvinyl alcohol and a water-dispersible polyurethane binder were mixed and a dispersant was included, it could be confirmed that the heat insulation property, dusting property, and uniformity were further improved. Here, it was confirmed that the insulation sheet was more uniformly coated and there was almost no empty space inside the insulation sheet so that the insulation property was further improved.

On the other hand, in the case of Comparative Examples 1 and 2, it could be confirmed that the heat insulation property, dusting property, and uniformity were considerably lowered as compared with Examples.

Therefore, when the aerogel composition according to one or more embodiments was used, it could be confirmed that a heat insulation property, uniformity, and low dusting property were excellent or suitable.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

It will be understood that, although the terms "first," "second," etc., may be used herein to describe various elements, components, regions, layers and/or sections, these elements, components, regions, layers and/or sections should not be limited by these terms. These terms are used to distinguish one element, component, region, layer or section from another element, component, region, layer or section.

Spatially relative terms, such as "lower," "upper," and the like, may be used herein for ease of explanation to describe one element or feature's relationship to another element(s) or feature(s) referring to the figures. It will be understood that the spatially relative terms are intended to encompass different orientations of the device in use or in operation, in addition to the orientation depicted in the figures. The device may be otherwise oriented (e.g., rotated 90 degrees or at other orientations) and the spatially relative descriptors used herein should be interpreted accordingly.

It will be understood that when an element or layer is referred to as being "on" another element or layer, it can be directly on the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof.

Expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

As used herein, the term "and/or" includes any and all combinations of one or more of the associated listed items.

Also, any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The use of "may" when describing embodiments of the present disclosure refers to "one or more embodiments of the present disclosure."

As used herein, the singular forms "a", "an" and "the" are intended to include the plural forms as well, unless the context clearly indicates otherwise.

The portable device, vehicle, and/or the battery, e.g., a battery controller, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

## Claims

1. An aerogel composition for a battery insulation sheet, the aerogel composition comprising:
a solvent;
a fibrous support;
an aerogel;
an antifoaming agent; and
a functional material comprising a binder, a dispersant, or a combination thereof,
wherein the fibrous support is 5 wt% to 70 wt%, the aerogel is 10 wt% to 90 wt%, the antifoaming agent is 0.05 wt% to 2 wt%, and the functional material is 0.5 wt% to 20 wt%, with respect to a total solid amount of the aerogel composition, wherein the contents of the solvent, the fibrous support, the aerogel, the antifoaming agent, and the functional material sum up to 100 wt% of the aerogel composition.

2. The aerogel composition of claim 1, wherein a weight ratio of an amount of the solvent to the total solid amount of the aerogel composition is in a range of 1:1 to 1:90.

3. The aerogel composition of claim 1 or 2, wherein the fibrous support is one or more selected from the group consisting of a natural fiber, a silica fiber, a glass fiber, a carbon fiber, a basalt fiber, and a polymer fiber.

4. The aerogel composition of any one of the preceding claims, wherein the aerogel has a Brunauer-Emmett-Teller (BET) specific surface area of 500 m²/g to 1,000 m²/g measured by ISO 9277:2022.

5. The aerogel composition of any one of the preceding claims, wherein the antifoaming agent comprises a silicone-based antifoaming agent.

6. The aerogel composition of any one of the preceding claims, wherein the binder comprises an aqueous polymer binder, and
the aqueous polymer binder is one or more selected from the group consisting of an aqueous polymer, an anionic water-soluble polymer, a cationic water-soluble polymer, and a water-dispersible polymer.

7. The aerogel composition of any one of the preceding claims, wherein the binder is 0.5 wt% to 20 wt% with respect to the total solid amount of the aerogel composition.

8. The aerogel composition of any one of the preceding claims, wherein the binder comprises an aqueous polymer and a water-dispersible polymer, and
the aqueous polymer and the water-dispersible polymer have a weight ratio of 1:1 to 1:5.

9. The aerogel composition of any one of the preceding claims, wherein the dispersant is one or more selected from the group consisting of a surfactant and a phosphate-based salt.

10. The aerogel composition of any one of the preceding claims, wherein the dispersant is 0.1 wt% to 6 wt% with respect to the total solid amount of the aerogel composition.

11. The aerogel composition of any one of the preceding claims, wherein the binder and the dispersant a have a weight ratio of 1:0.001 to 1:0.67.

12. The aerogel composition of any one of the preceding claims, wherein the fibrous support is 25 wt% to 60 wt%, the aerogel is 30 wt% to 70 wt%, the antifoaming agent is 0.1 wt% to 1 wt%, and the binder is 2 wt% to 15 wt%, with respect to the total solid amount of the aerogel composition; or
wherein the fibrous support is 25 wt% to 60 wt%, the aerogel is 30 wt% to 70 wt%, the antifoaming agent is 0.1 wt% to 1 wt%, and the binder is 2 wt% to 15 wt%, with respect to the total solid amount of the aerogel composition, and the functional material comprises the dispersant, the dispersant being 0.1 wt% to 3 wt% with respect to the total solid amount of the aerogel composition.

13. A method of preparing an aerogel composition, the method comprising:
mixing a functional material comprising a binder, a dispersant, or a combination thereof into a solvent to prepare a solvent mixture;
mixing the solvent mixture and an aerogel to prepare an aerogel mixture;
mixing the aerogel mixture and a fibrous support to prepare an aerogel composition; and
mixing the aerogel composition and an antifoaming agent,
wherein the fibrous support is 5 wt% to 70 wt%, the aerogel is 10 wt% to 90 wt%, the antifoaming agent is 0.05 wt% to 2 wt%, and the functional material is 0.5 wt% to 20 wt%, with respect to a total solid amount of the aerogel composition.

14. The method of claim 13, wherein the mixing to prepare the solvent mixture, the mixing to prepare the aerogel mixture, the mixing to prepare the aerogel composition, and the mixing of the aerogel composition and the antifoaming agent are each performed using a mixer,
the mixer comprises a low-speed first blade and a high-speed second blade, and
a rotation speed of the second blade in the mixing of the aerogel composition and the antifoaming agent is in a range of 30% to 75% of a rotation speed of the second blade in one or more of the mixing to prepare the aerogel mixture or the mixing to prepare the aerogel composition.

15. A method of manufacturing a battery insulation sheet, the method comprising:
coating a substrate with the aerogel composition of claim 1; and
drying the substrate coated with the aerogel composition.

## Amended claims

### Amended claims in accordance with Rule 137(2) EPC.

1. An aerogel composition for a battery insulation sheet, the aerogel composition comprising:
a solvent;
a fibrous support;
an aerogel;
an antifoaming agent; and
a functional material comprising a binder, a dispersant, or a combination thereof,
wherein the fibrous support is 5 wt% to 70 wt%, the aerogel is 10 wt% to 90 wt%, the antifoaming agent is 0.05 wt% to 2 wt%, and the functional material is 0.5 wt% to 20 wt%, with respect to a total solid amount of the aerogel composition, wherein the contents of the solvent, the fibrous support, the aerogel, the antifoaming agent, and the functional material sum up to 100 wt% of the aerogel composition,
wherein the binder comprises an aqueous polymer binder, and
the aqueous polymer binder is one or more selected from the group consisting of an aqueous polymer, an anionic water-soluble polymer, a cationic water-soluble polymer, and a water-dispersible polymer, and
wherein the aerogel has a Brunauer-Emmett-Teller (BET) specific surface area of 500 m²/g to 1,000 m²/g measured by ISO 9277:2022.

2. The aerogel composition of claim 1, wherein a weight ratio of an amount of the solvent to the total solid amount of the aerogel composition is in a range of 1:1 to 1:90.

3. The aerogel composition of claim 1 or 2, wherein the fibrous support is one or more selected from the group consisting of a natural fiber, a silica fiber, a glass fiber, a carbon fiber, a basalt fiber, and a polymer fiber.

4. The aerogel composition of any one of the preceding claims, wherein the antifoaming agent comprises a silicone-based antifoaming agent.

5. The aerogel composition of any one of the preceding claims, wherein the binder is 0.5 wt% to 20 wt% with respect to the total solid amount of the aerogel composition.

6. The aerogel composition of any one of the preceding claims, wherein the binder comprises an aqueous polymer and a water-dispersible polymer, and
the aqueous polymer and the water-dispersible polymer have a weight ratio of 1:1 to 1:5.

7. The aerogel composition of any one of the preceding claims, wherein the dispersant is one or more selected from the group consisting of a surfactant and a phosphate-based salt.

8. The aerogel composition of any one of the preceding claims, wherein the dispersant is 0.1 wt% to 6 wt% with respect to the total solid amount of the aerogel composition.

9. The aerogel composition of any one of the preceding claims, wherein the binder and the dispersant a have a weight ratio of 1:0.001 to 1:0.67.

10. The aerogel composition of any one of the preceding claims, wherein the fibrous support is 25 wt% to 60 wt%, the aerogel is 30 wt% to 70 wt%, the antifoaming agent is 0.1 wt% to 1 wt%, and the binder is 2 wt% to 15 wt%, with respect to the total solid amount of the aerogel composition; or
wherein the fibrous support is 25 wt% to 60 wt%, the aerogel is 30 wt% to 70 wt%, the antifoaming agent is 0.1 wt% to 1 wt%, and the binder is 2 wt% to 15 wt%, with respect to the total solid amount of the aerogel composition, and the functional material comprises the dispersant, the dispersant being 0.1 wt% to 3 wt% with respect to the total solid amount of the aerogel composition.

11. A method of preparing an aerogel composition, the method comprising:
mixing a functional material comprising a binder, a dispersant, or a combination thereof into a solvent to prepare a solvent mixture;
mixing the solvent mixture and an aerogel to prepare an aerogel mixture;
mixing the aerogel mixture and a fibrous support to prepare an aerogel composition; and
mixing the aerogel composition and an antifoaming agent,
wherein the fibrous support is 5 wt% to 70 wt%, the aerogel is 10 wt% to 90 wt%, the antifoaming agent is 0.05 wt% to 2 wt%, and the functional material is 0.5 wt% to 20 wt%, with respect to a total solid amount of the aerogel composition,
wherein the binder comprises an aqueous polymer binder, and
the aqueous polymer binder is one or more selected from the group consisting of an aqueous polymer, an anionic water-soluble polymer, a cationic water-soluble polymer, and a water-dispersible polymer, and
wherein the aerogel has a Brunauer-Emmett-Teller (BET) specific surface area of 500 m²/g to 1,000 m²/g measured by ISO 9277:2022.

12. The method of claim 11, wherein the mixing to prepare the solvent mixture, the mixing to prepare the aerogel mixture, the mixing to prepare the aerogel composition, and the mixing of the aerogel composition and the antifoaming agent are each performed using a mixer,
the mixer comprises a low-speed first blade and a high-speed second blade, and
a rotation speed of the second blade in the mixing of the aerogel composition and the antifoaming agent is in a range of 30% to 75% of a rotation speed of the second blade in one or more of the mixing to prepare the aerogel mixture or the mixing to prepare the aerogel composition.

13. A method of manufacturing a battery insulation sheet, the method comprising:
coating a substrate with the aerogel composition of claim 1; and
drying the substrate coated with the aerogel composition.
